# EUROPÄISCHE PATENTSCHRIFT

(11) **EP 0 830 976 B1**
(45) Veröffentlichungstag und Bekanntmachung des Hinweises auf die Patenterteilung: **05.12.2001**
(21) Anmeldenummer: 97116030.4
(22) Anmeldetag: 15.09.1997
(51) Int. Cl.: B60P 3/08

(54) **Fahrzeugtransporter**
Vehicle transporter
Transporteur pour véhicules

(30) Priorität: 13.09.1996 DE 29615981 U
(43) Veröffentlichungstag der Anmeldung: 25.03.1998
(73) Patentinhaber: Kässbohrer Transport Technik GmbH, 5020 Salzburg (AT)
(72) Erfinder: Kraihamer, Mathias, Ing., 5301 Eugendorf (AT)
(74) Vertreter: Grünecker, Kinkeldey, Stockmair & Schwanhäusser Anwaltssozietät

(56) Entgegenhaltungen:
- EP-A- 0 517 634
- DE-A- 2 735 003
- DE-A- 3 409 405
- GB-A- 1 326 164

## Beschreibung

Die Erfindung betrifft einen Fahrzeugtransporter mit einer oberen und einer unteren Ladeplattform, wobei die obere Ladeplattform im wesentlichen an ihren vorderen und hinteren Enden mittels Hubeinrichtungen relativ zur unteren Ladeplattform anhebbar und absenkbar ist, von welchen Hubeinrichtungen wenigstens eine ein Paar von beidseitigam Fahrzeugtransporter angeordneten, an ihren unteren Enden mit einer verdrehbaren Querachse verbundenen Hubarmen aufweist, welchen mit ihren oberen Enden verschwenkbar an der oberen Ladeplattform gelagert sind.

Ein solcher Fahrzeugtransporter ist aus DE-A-2735003 bekannt. Der Fahrzeugtransporter kann ein Zugfahrzeug und einen Anhänger umfassen. Sowohl am Zugfahrzeug als auch am Anhänger ist jeweils eine untere und eine obere Ladeplattform vorgesehen, wobei die obere Ladeplattform durch zwei in der Regel separat ansteuerbare Hubeinrichtungen anhebbar und absenkbar ist. Bei der DE-A-2735003 weist wenigstens eine Hubeinrichtung zwei beidseitig zum Fahrzeugtransporter angeordnete Hubarme auf. Diese sind an ihren unteren Enden an einer verdrehbaren Querachse befestigt. Durch Verdrehen der Querachse sind die Hubarme aus einer Ausgangsstellung, in der sie im wesentlichen parallel zur unteren Ladeplattform angeordnet sind, in eine Hubstellung verschwenkbar, in der sie in etwa unter einem spitzen Winkel zur unteren Ladeplattform angeordnet sind. Beim Verschwenken zwischen Ausgangsstellung und Hubstellung wird die obere Ladeplattform entsprechend angehoben, wobei die Hubarme an ihren oberen Enden schwenkbar an der oberen Ladeebene gelagert sind.

Die Hubarme bei dem vorbekannten Fahrzeugtransporter weisen dabei sowohl in ihrer Ausgangsstellung als auch Hubstellung die gleiche Länge auf, so daß sie in ihrer Ausgangsstellung relativ viel Platz benötigen. Außerdem wird die obere Ladeform beim Hochheben zusätzlich in horizontaler Richtung in Fahrzeuglängsrichtung bewegt. Dadurch kann es sich als notwendig erweisen, daß bereits auf der oberen Ladeplattform abgestellte Fahrzeuge nochmals versetzt werden müssen, um nicht mit Fahrzeugen auf anderen Ladeplattformen des Zugfahrzeugs oder entsprechend des Anhängers zu kollidieren. Dies erweist sich insbesondere bei solchen Fahrzeugtransportem in der Regel als notwendig, bei denen die Ladeplattformen über eine Anzahl von Schwenkplattformen verfügen, durch die eine verschachtelte Anordnung der zu transportierenden Fahrzeuge möglich ist.

Um sowohl die Länge der Hubarme reduzieren zu können als auch die horizontale Versetzung der oberen Ladeplattform beim Anheben vermindern zu können, ist aus der Praxis bereits bekannt, an der oberen Ladeplattform sich in Fahrzeuglängsrichtung nach vom schräg nach unten zur unteren Ladeplattform erstreckende Seitenkästen anzubringen. In diesen Seitenkästen werden die oberen Enden der Hubarme im wesentlichen im unteren Endabschnitt des Seitenkastens geführt. Da sich dieser Seitenkasten in Richtung unterer Ladeplattform erstreckt, können die Hubarme mit verminderter Länge ausgebildet sein. Diese Länge entspricht beispielsweise nur noch dem Abstand von unterer Ladeplattform zum unteren Endabschnitt des Seitenkasten.

Bei dieser Lösung hat sich allerdings erwiesen, daß der Seitenkasten ein Öffnen von Fahrzeugtüren der auf dem Fahrzeugtransporter abgestellten Fahrzeuge behindert, so daß diese beispielsweise zum Herunterfahren vom Fahrzeugtransporter nur durch eine hintere Fahrzeugtür zugänglich sind.

Beim Stand der Technik ist außerdem zu beachten, daß die Hubarme aufgrund ihrer relativ großen Länge sowohl während des Verschwenkens als auch in ihrer Hubstellung aufgrund der spitzwinkligen Anordnung relativ zur Vertikalen erheblichen Kräften durch die Gewichte der oberen Ladeplattform und der auf dieser abgestellten Fahrzeuge ausgesetzt sind. Dadurch erfolgt eine entsprechend hohe Beanspruchung der verdrehbaren Querachse, des Verstellmechanismus zum Verschwenken der Hubarme sowie insbesondere der zugehörigen Schwenklager.

Der vorliegenden Erfindung liegt daher die Aufgabe zugrunde, einen Fahrzeugtransporter der eingangs genannten Art dahingehend zu verbessern, daß die obere Ladeplattform in einfache Weise durch sowohl in Breiten- als auch Längsrichtung des Fahrzeugtransporters wenig Platz beanspruchende Hubarme bei geringer Belastung anhebbar oder absenkbar ist.

Diese Aufgabe wird bei einem Fahrzeugtransporter mit den Merkmalen des Oberbegriffs des Anspruchs 1 dadurch gelöst, daß jeder Hubarm wenigstens ein unteres Aufnahmerohr und ein in diesem höhenverstellbar gelagertes Teleskoprohr aufweist, wobei das Aufnahmerohr in seine im wesentlichen vertikale Stellung vor Ausschieben des Teleskoprohres verschwenkt ist, und daß an der oberen Ladeplattform eine Gleitschiene angeordnet ist, entlang welcher ein oberes Ende des teleskoprohres verschiebbar ist.

Dadurch ist der Hubarm bei abgesenkter oberer Ladeplattform relativ kurz, so daß er in Fahrzeuglängsrichtung weder nach hinten über den Fahrzeugtransporter noch in den Bereich der Radkästen vorsteht. Weiterhin wird durch die Kürze des Aufnahmerohres die obere Ladeplattform nur wenig beim Absenken oder Anheben horizontal bewegt, so daß ein nachträgliches Verstellen der Fahrzeug auf der Ladeplattform nicht notwendig ist. Seitenkästen sind nicht erforderlich, die die nutzbare Breite der Ladeplattform einschränken würden. Gleichzeitig bleibt der Vorteil erhalten, daß beide Hubarme gemeinsam über die verbindende Querachse verschwenkbar sind und auch beide gleichzeitig durch Aushub des Teleskoprohres verlängerbar sind. Dadurch ergibt sich insgesamt eine einfache und platzsparende Konstruktion beziehungsweise Steuerung für die Hubarme.

Als weiterer Vorteil ergibt sich gemäß der Erfindung, daß die Aufnahmerohre in eine im wesentlichen vertikale Verstellung verschwenkt werden können, bevor ein Ausschieben des entsprechenden Teleskoprohres erfolgt. Dadurch sind einerseits die Belastungen während des Verschwenkens des Aufnahmerohres aufgrund dessen geringer Länge auf die Lagerung, den Verstellmechanismus und dergleichen relativ gering und andererseits erfolgt eine Belastung beim Ausschieben des Teleskoprohres und bei vollständig ausgeschobenem Teleskoprohr im wesentlichen in vertikaler Richtung, so daß zwischen Aufnahmerohr und Teleskoprohr wirkende Radialkräfte relativ gering sind.

Um eine horizontale Bewegung der oberen Ladeplattform in diesem Zusammenhang bei deren Anheben oder Absenken vollständig zu verhindern, ist an der oberen Ladeplattform eine Gleitschiene angeordnet, entlang welcher ein oberes Ende des Teleskoprohres verschiebbar gelagert ist. Dadurch verschiebt sich der Lagerpunkt zwischen Hubarm und oberer Ladeplattform beim Verschwenken des Hubarms stetig entlang der Gleitschiene, so daß eine Verschiebung der oberen Ladeplattform in horizontaler Richtung unterdrückt ist. Am oberen Ende des Teleskoprohres kann dazu ein Gleitschuh angeordnet sein.

Zwar sind aus der DE-A-3409405 und der DE 69207817 T2 teleskopierbare Hubarme bekannt. Diese sind beidseitig vom Fahrzeugtransporter jeder für sich verschwenkbar und verstellbar angeordnet. Dadurch wird die Steuerung insgesamt aufwendig. Ein weiterer Nachteil bei diesem vorbekannten Fahrzeugtransporter ist, daß der Hubarm in seiner Hub- oder Ausziehstellung mit angehobener oberer Ladeplattform in Fahrzeuglängsrichtung ebenfalls geneigt ist. Dadurch ergibt sich die oben beschriebene erhebliche Belastung dieser teleskopierbaren Hubarme als auch der anderen, dem anderen Ende der Ladeplattform zugeordneten Hubeinrichtung. Die erfindungsgemäßen Hubarme sind in der Ausziehstellung statt dessen im wesentlichen vertikal angeordnet.

Bei einem bevorzugten Ausführungsbeispiel der Erfindung kann das Aufnahmerohr direkt im wesentlichen an seinem unteren Ende mit der Querachse verbunden sein. Dadurch ist beispielsweise kein separates Bauteil zum Verbinden von Querachsen und Ausschubrohr erforderlich.

Entsprechend erweist es sich als vorteilhaft, wenn das Teleskoprohr direkt im wesentlichen an seinem oberen Ende schwenkbar an der oberen Ladeebene gelagert ist. Auch in diesem Fall ist kein zusätzliches Bauteil zur Schwenkverbindung von oberer Ladeplattform und Hubarm erforderlich.

Das Teleskoprohr kann relativ zum Aufnahmerohr beispielsweise durch eine Spindel auf und ab bewegt werden. Bevorzugt ist ein Ausführungsbeispiel, bei dem innerhalb von Aufnahmerohr und Teleskoprohr eine pneumatisch oder hydraulisch betätigbare Kolben-Zylinder-Einheit zum Ausschieben des Teleskoprohres relativ zum Aufnahmerohr angeordnet ist. Die Kolben-Zylinder-Einheit kann so angeordnet sein, daß der Zylinder mit dem Aufnahmerohr und der verschiebbaren Kolben mit dem Teleskoprohr verbunden ist. Es ist auch möglich, daß Aufnahmerohr und Teleskoprohr selbst als Kolben-Zylinder-Einheit ausgebildet sind.

Um am Fahrgestell oder Chassis des Fahrzeugtransporters nur geringfügige Änderungen beim Anbringen der erfindungsgemäßen Hubeinrichtung vornehmen zu müssen, kann die Querachse durch ein unterhalb des Chassis angeordnetes Hubrohr gebildet sein. Dieses verläuft quer zur Fahrzeuglängsachse und ist am Chassis verdrehbar gelagert. Die freien Enden des Hubrohres stehen seitlich über das Chassis über, wobei an diesen die unteren Enden der Hubarme befestigt sind. Durch die Befestigung der Hubarme unterhalb des Chassis können die Hubarme in ihrer Ausgangs- oder Einschubstellung, in der die obere Ladeplattform nach unten abgesenkt ist, ohne Beeinträchtigung der Breite der unteren Ladeplattform neben und teilweise unterhalb dieser angeordnet werden.

Um das Hubrohr in einfache Weise zum gleichzeitigen Verschwenken der Hubarme verdrehen zu können, kann von diesem in etwa mittig ein Kurbelarm abstehen, an dem ein mit seinem anderen Ende am Chassis befestigter Arbeitszylinder angelenkt ist. Auf diese Weise kann mittels eines Arbeitszylinders das Hubrohr verdreht und dadurch die Hubarme verschwenkt werden.

Bei einem Ausführungsbeispiel der Erfindung kann die Gleitschiene Teil eines Längsträgers der oberen Ladeplattform sein. In diesem Fall wird der Gleitschuh direkt durch den Längsträger geführt.

Um eine solche bauliche Veränderung eines Längsträgers zu vermeiden, kann die Gleitschiene als separates Bauteil an der oberen Ladeplattform befestigt sein. Die Befestigung kann beispielsweise lösbar an einem entsprechenden Längsträger der oberen Ladeplattform erfolgen. Die Gleitschiene kann an einer Unterseite oder an einer Außenseite des Längsträgers befestigt werden.

Um die Reibung zwischen Gleitschuh und Gleitschiene zu vermindern, kann der Gleitschuh eine am oberen Ende des Teleskoprohes drehbar gelagerte Rolle sein, die entlang der Gleitschiene abrollt. Die Gleitschiene kann dabei im wesentlichen U-förmig sein und zur Aufnahme einer die Rolle drehbar lagernden Achse in Richtung Teleskoprohr geöffnet sein. Durch diese Öffnung wird die die Rolle und das Teleskoprohr verbindende Achse hindurchgeführt. Vorteilhafte Profile für die Gleitschiene sind U- oder C-förmig.

Um in der Einschubstellung eine möglichst geringe Länge des Hubarms zu gewährleisten, kann das Teleskoprohr in der in Fahrzeuglängsrichtung nach hinten verschwenkten Einschubstellung des Hubarms im wesentlichen vollständig im Aufnahmerohr eingeschoben sein. Dabei kann das Aufnahmerohr an seinem oberen Ende zur Aufnahme der die Rolle leitenden Achse eine Ausnehmung aufweisen, in der die Achse bei eingeschobenen Teleskoprohr einschiebbar ist.

Teleskoprohr und Ausschubrohr weisen entsprechend der auftretenden Schub- und Biegebelastungen geeignete Querschnitte auf. Bevorzugt können Teleskoprohr und Aufnahmerohr aus eckigen, insbesondere sechseckigen Kastenprofilen gebildet sein. Weitere Querschnitte können rund oder oval sein. Ebenso ist eine Kombination von runden und eckigen Abschnitten bei den Kastenprofilen möglich.

Um den Hubarm in seiner Einschubstellung möglicht tief neben der unteren Ladeplattform anordnen zu können, erweist es sich weiterhin als vorteilhaft, wenn die Rolle in Fahrzeuglängs-richtung nach vom versetzt am Teleskoprohr drehbar gelagert ist. Die Kolben-Zylinder-Einheit kann mittig im Hubarm angeordnet sein.

Um gleichzeitig zur Lagerung der Rolle am Teleskoprohr und zur Befestigung des Aufnahmerohrs am Hubrohr die Kolben-Zylinder-Einheit in den beiden Rohren besser unterbringen zu können, kann diese in Fahrzeuglängsrichtung nach hinten versetzt außermittig im Hubarm angeordnet werden.

Beim Ausschieben des Teleskoprohres aus dem Aufnahmerohr ist es von Vorteil, wenn das Teleskoprohr zumindest in jeder Ausziehstellung des Teleskoprohres arretiert werden kann. Dies kann dadurch erfolgen, daß das Teleskoprohr im Aufnahmerohr und/oder die Kolben-Zylinder-Einheit durch eine mechanische und/oder pneumatische und/oder hydraulische Arretiereinrichtung arretierbar sind.

Auf diese Weise können sowohl Teleskoprohr und Aufnahmerohr und/oder die Kolben-Zylinder-Einheit zumindest in der Ausziehstellung arretiert werden. Für die Arretierung von Teleskoprohr und Aufnahmerohr kann beispielsweise eine mechanische Arretiereinrichtung eingesetzt werden. Ebenso können die Arretiereinrichtungen für Teleskoprohr und Aufnahmerohr beziehungsweise Kolben-Zylinder-Einheit auch pneumatisch oder hydraulisch betrieben werden.

Um auch während des Anhebens oder Absenkens der Ladeplattform ein plötzliches Absinken der oberen Ladeplattform zu verhindern, erweist es sich als vorteilhaft, wenn eine pneumatische oder hydraulische Arretiereinrichtung der Kolben-Zylinder-Einheit zur im wesentlichen stufenlosen Arretierung zugeordnet ist. Auf diese Weise kann auch jede Zwischenstellung der oberen Ladeplattform durch die Arretiereinrichtung gesichert werden. Die Arretiereinrichtung kann in der Kolben-Zylinder-Einheit integriert sein, so daß insgesamt weniger Platz erforderlich ist.

In diesem Zusammenhang erweist es sich weiterhin als vorteilhaft, wenn die Arretiereinrichtung in Richtung Arretierstellung vorgespannt ist. Dadurch kann während des Anhebens der oberen Ladeplattform jede ihrer Anhebestellungen automatisch gesichert werden. Beim Absinken der Ladeplattform wird die Vorspannung der Arretiereinrichtung entsprechend gelöst.

Bevorzugt wird die Hubeinrichtung mit teleskopierbaren Hubarmen nach vorliegender Erfindung am rückseitigen Ende eines Zugfahrzeuges oder eines Anhängers des Fahrzeugtransporters angeordnet. Die dem vorderseitigen Ende der Ladeplatteformen zugeordnete weitere Hubeinrichtung kann als Tragsäule mit Spindelantrieb, als Hubschwinge oder ebenfalls als teleskopierbarer Hubarm gemäß der Erfindung ausgebildet sein.

Um bei der Relativbewegung zwischen Teleskoprohr und Aufnahmerohr eine möglichst geringe Reibung zu haben, können zwischen Teleskoprohr und Aufnahmerohr reibungsvermindemde Gleitplatten zumindest im Bereich des oberen Endes auf der Innenseite des Aufnahmerohres stellenweise angeordnet sein.

Es ist denkbar, die Schwenkbewegung des Hubarms mit der Ausschubbewegung des Teleskoprohres so zu synchronisieren, daß allmählich während des Verschwenkens das Teleskoprohr weiter ausgeschoben wird und bei Erreichen der im wesentlichen Vertikalstellung des Aufnahmerohres das Teleskoprohr vollständig ausgeschoben ist Bevorzugt wird erst das Aufnahmerohr verschwenkt und anschließend das Teleskoprohr ausgeschoben.

Im folgenden wird ein vorteilhaftes Ausführungsbeispiel der Erfindung anhand der beigefügten Figuren näher erläutert und beschrieben.

Es zeigen:
- Fig. 1: eine prinzipielle Seitenansicht eines Teils eines erfindungsgemäßen Fahrzeugtransporters in einer ersten Stellung einer oberen Ladeplattform;
- Fig. 2: Die Seitenansicht nach Fig. 1 in einer zweiten Stellung der oberen Ladeplattform;
- Fig. 3: eine Seitenansicht nach Fig. 1 in einer dritten Stellung der oberen Ladeplattform;
- Fig. 4: eine Seitenansicht nach Fig. 1 in einer vierten Stellung der oberen Ladeplattform;
- Fig. 5: eine Seitenansicht analog zu Fig. 1 mit einer weiteren Hubeinrichtung und
- Fig. 6: eine prinzipielle Darstellung einer Arretiereinrichtung für einen Hubarm.

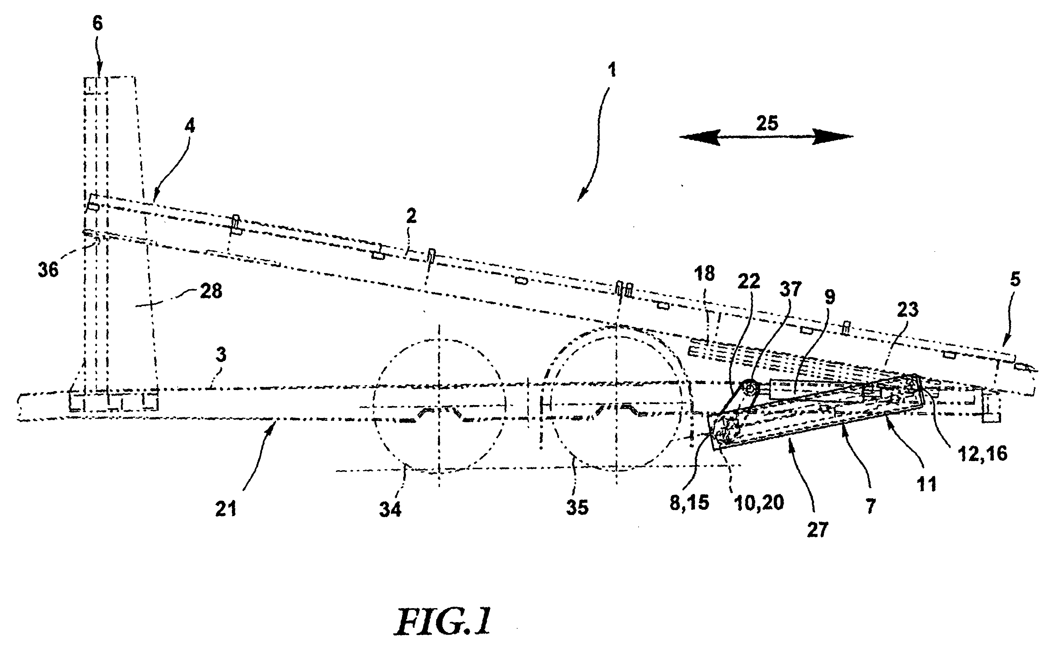

In Fig. 1 ist als Teil eines Fahrzeugtransporters 1 ein Fahrzeugtransporteranhänger dargestellt. Dieser weist eine obere Ladeplattform 2 und eine untere Ladeplattform 3 auf. Die untere Ladeplattform 3 erstreckt sich im wesentlichen horizontal und weist an ihrem in Fahrzeuglängsrichtung 25 vorderen Ende eine nicht dargestellte Kupplungsvorrichtung zum Ankuppeln an ein Zugfahrzeug als Teil des Fahrzeugtransporters auf. An einem die untere Ladeplattform 3 tragenden Chassis 21 sind beidseitig Räder 34 und 35 drehgelagert. Sowohl an einem vorderen Ende 4 als auch einem hinteren Ende 5 von unterer und oberer Ladeplattform 3,2 sind Hubeinrichtungen 6,7 angeordnet, durch die die obere Ladeplattform 2 relativ zur unteren Ladeplattform 3 absenkbar und anhebbar ist.

Die vordere Hubeinrichtung 6 ist als vertikale Tragsäule 28 ausgebildet. In dieser ist eine Hubspindel 36 enthalten, durch die das vordere Ende 4 des oberen Ladeplattform 2 entlang eines im wesentlichen vertikalen Weges anhebbar und absenkbar ist.

Dem hinteren Ende 5 sind als Hubeinrichtungen 7 zwei beidseitig zum Fahrzeugtransporter 1 angeordnete Hubarme 11 zugeordnet, von denen ein Hubarm sichtbar ist. Beide Hubarme sind gleich aufgebaut, so daß im folgenden nur ein einseitig angeordneter Hubarm in seinem Aufbau und seiner Funktion beschrieben wird.

Der Hubarm 11 ist an seinem unteren Ende 8 an einer als Hubrohr 20 ausgebildeten Querachse 10 befestigt. Diese erstreckt sich quer zur Fahrzeuglängsrichtung 25 unterhalb des Chassis 21 und ist an diesem verdrehbar gelagert. In etwa mittig steht vom Hubrohr 20 ein Kurbelarm 22 in Fig. 1 schräg nach hinten und oben ab. An einem Lagerpunkt 37 am freien Ende des Kurbelarms 22 ist ein Arbeitszylinder 9 angelenkt.

Am oberen Ende 12 ist der Hubarm 11 entlang einer unterhalb der oberen Ladeplattform 2 angeordneten Gleitschiene 18 gleitverschieblich gelagert.

In Fig. 1 ist der Hubarm 11 in einer Einschubstellung 27 dargestellt, in der er im wesentlichen parallel zur unteren Ladeplattform 3 und mit seinem unteren Ende 8 unterhalb dieser angeordnet ist.

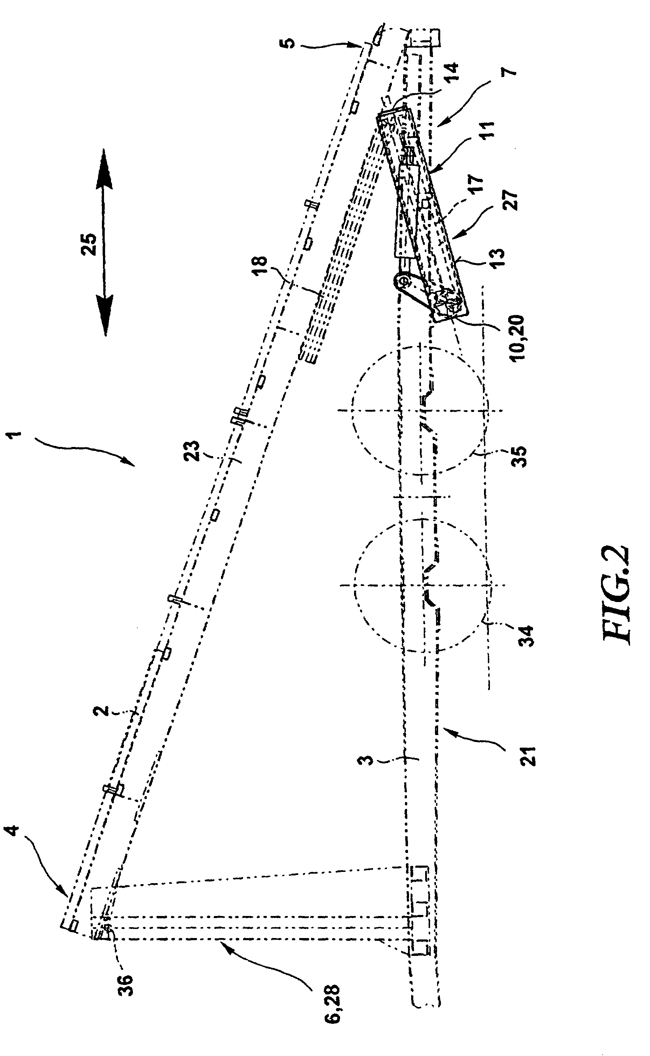

In den folgenden Fig. 2 bis 4 sind verschiedene Anhebestellungen der oberen Ladeplattform 2 dargestellt. Gleiche Bezugszeichen kennzeichnen gleiche Teile und werden nur noch teilweise erwähnt.

In Fig. 2 ist das vordere Ende 4 der oberen Ladeplattform 2 in einer maximal angehobenen Stellung angeordnet Die Hubspindel 36 ist nahezu am oberen Ende der Tragsäule 28 als weiterer Hubeinrichtung 6 angeordnet. Die dem hinteren Ende 5 als weitere Hubeinrichtung 7 zugeordneten Hubarme 11 sind etwas steiler als in Fig. 1 aufgrund der größeren Schrägstellung der oberen Ladeplattform 2 angeordnet. Das hintere Ende 5 der oberen Ladeplattform 2 liegt noch auf dem hinteren Ende der unteren Ladeplattform 3 auf.

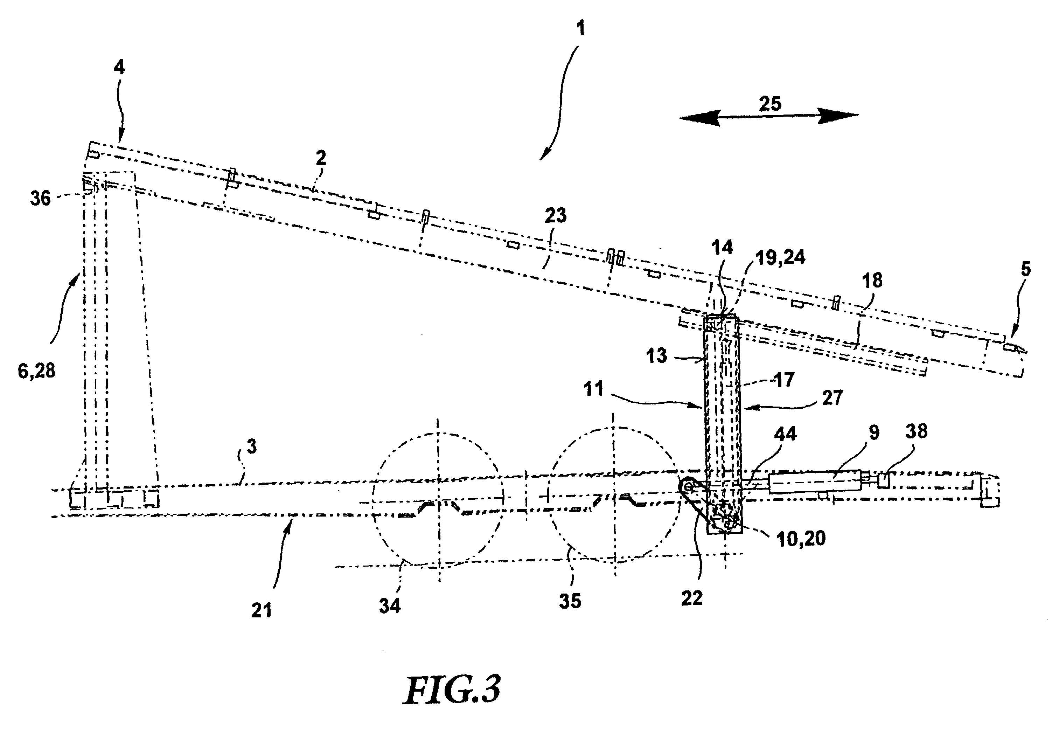

In Fig. 3 ist ein Kolben 44 des Arbeitszylinder 9 soweit ausgeschoben, daß der Hubarm 11 vertikal angeordnet ist. Der Arbeitszylinder 9 ist mit seinem mit dem Kurbelarm 22 gegenüberliegenden Ende an einem Querträger 38 des Chassis 21 befestigt.

Durch das Verschwenken des Hubarmes 11 ist dessen oberes Ende entlang der Gleitschiene 18 unterhalb eines Längsträgers 23 der oberen Ladeplattform 2 in Fahrzeuglängsrichtung 25 nach vorne mittels einer in der Gleitschiene 18 geführten Rolle 24 als Gleitschuh 19 verschoben.

In der Stellung nach Fig. 3 ist ein Teleskoprohr 14, das zusammen mit einem das Teleskoprohr aufnehmenden Aufnahmerohr 13 den Hubarm 11 bildet, noch nicht mittels einer innerhalb des Hubarms 11 angeordneten Kolben-Zylinder-Einheit 17 ausgeschoben.

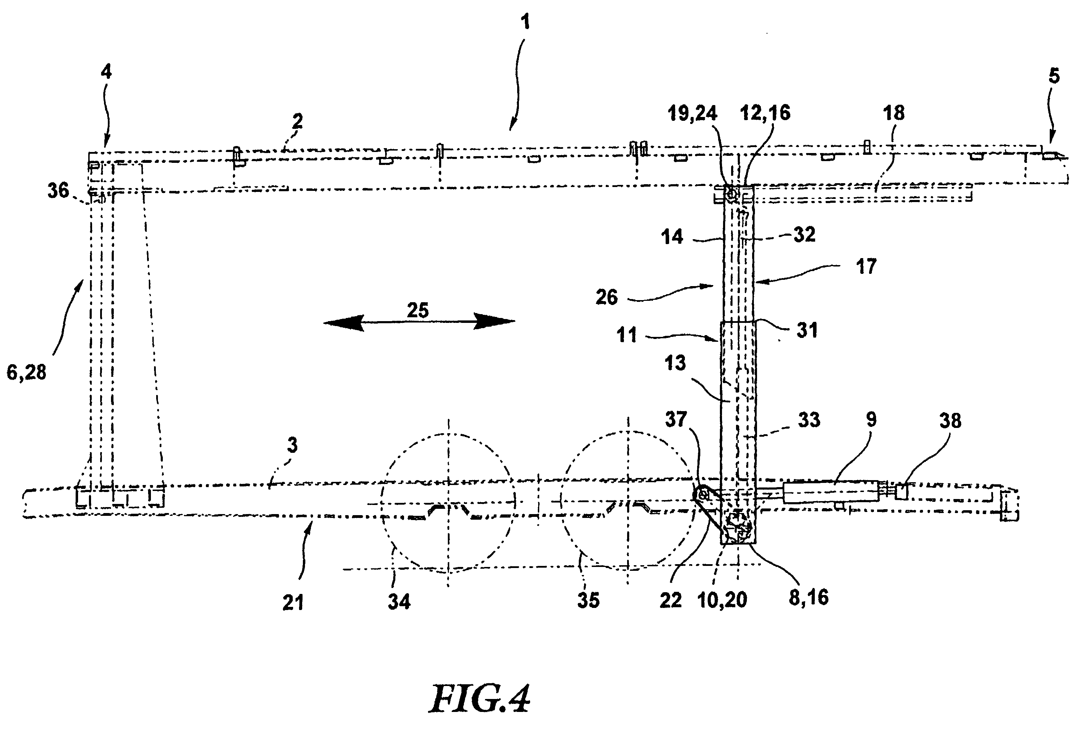

In Fig. 4 ist die obere Ladeplattform 2 in ihrer angehobenen, horizontalen Stellung dargestellt. Das Teleskoprohr 14 ist aus dem Aufnahmerohr 13 ausgeschoben, so daß der Hubarm 11 in seiner Ausziehstellung 26 dargestellt ist.

Das obere Ende 16 des Teleskoprohrs 14 bildet das obere Ende 12 des Hubarms 11. An diesem ist in Fahrzeuglängsrichtung 25 nach vorne versetzt die Rolle 24 drehbar gelagert. Diese ist in der im wesentlichen U- oder C-förmigen und in Richtung Teleskoprohr 14 offenen Gleitschiene 18 angeordnet.

Die Kolben-Zylinder-Einheit ist soweit pneumatisch oder hydraulisch betätigt, daß ein Kolben 32 im wesentlichen maximal aus einem zugehörigen Zylinder 33 ausgeschoben ist. Die Kolben-Zylinder-Einheit 17 ist in Fahrzeuglängsrichtung 26 nach hinten versetzt außer mittig im Hubarm 11 angeordnet. Der Kolben 32 endet unterhalb der Rolle 24 und der Zylinder 33 ist mit seinem unteren Ende im Bereich des Hubrohres 20 benachbart zum unteren Ende 16 des Aufnahmerohres 13 in diesem angeordnet. Das untere Ende 16 des Aufnahmerohres 13 bildet gleichzeitig das untere Ende des Hubarmes 11.

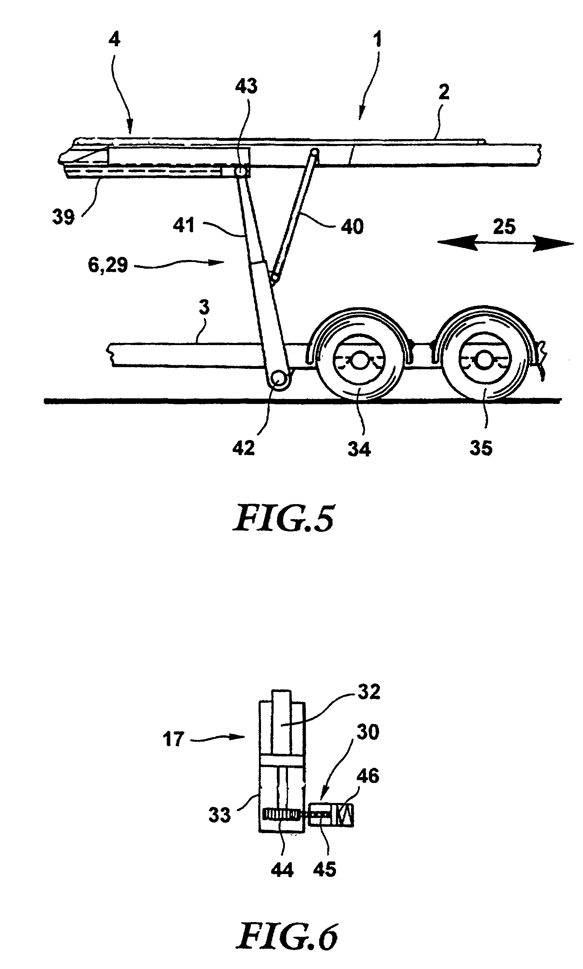

In Fig. 5 ist als weiteres Ausführungsbeispiel für eine vordere Hubeinrichtung 6 eine Hubschwinge 29 dargestellt. Diese kann anstelle einer Tragsäule 28, siehe Fig. 1 bis 4, zusammen mit den teleskopierbaren Hubarmen zum Anheben und Absenken der oberen Ladeplattform 2 verwendet werden. Ebenso ist es möglich, die Hubeinrichtung 6 ebenfalls durch teleskopierbare Hubarme zu bilden.

Die Hubschwinge 29 umfaßt eine Stütze 41 und eine Strebe 40. Die Stützte 41 ist an ihrem unteren Ende analog zu den Hubarmen 11 an einem Hubrohr 42 befestigt. Stützen 21 mit Streben 40 sind beidseitig zum Fahrzeugtransporter 1 angeordnet. Am oberen Ende ist an der Stütze 41 eine Rolle 43 drehbar gelagert, die entlang einer Gleitschiene 39 unterhalb der oberen Ladeplattform 2 abrollbar ist In der dargestellten Anhebestellung der oberen Ladeplattform 2 ist die Rolle 43 an einem in Fahrzeuglängsrichtung hinteren Ende der Gleitschiene 39 angeordnet. In der nicht dargestellten Absenkstellung der oberen Ladeplattform 2 ist die Rolle 43 am entsprechend vorderen Ende der Gleitschiene 39 angeordnet, wobei die Stütze 42 um Hubrohr 42 im Gegenuhrzeigerrichtung verschwenkt ist.

Die Strebe 40 verläuft im wesentlichen zwischen einem Anlenkpunkt seitlich an der oberen Ladeplattform 2 und einem Anlenkpunkt in etwa mittig zur Stützte 41.

In Fig. 6 ist eine Arretiereinrichtung 30 für die Kolben-Zylinder-Einheit 17 zum Ausschieben des Teleskoprohres 14 aus dem Ausnahmerohr 13, siehe beispielsweise Fig. 4, dargestellt. Die Arretiereinrichtung 30 weist ein Zahnrad 44 auf, das beim Anheben und Absenken des Kolbens 32 mit diesem verdrehbar ist, und einen Stösel 45, der zwischen entsprechende Zähne des Zahnrades 44 in Arretierstellung eingreift. Der Stösel 45 ist in Richtung Arretierstellung durch ein Federelement 46 kraftbelastet.

Die Arretiereinrichtung 30 in Fig. 6 ist beispielhaft dargestellt, wobei weitere mechanisch, pneumatisch oder hydraulisch betätigbare Arretiereinrichtungen für eine Arretierung des Teleskoprohres 14 relativ zum Aufnahmerohr 13 und/oder eine Arretierung der Kolben-Zylinder-Einheit einsetzbar sind.

## Patentansprüche

1. Fahrzeugtransporter (1) mit einer oberen und einer unteren Ladeplattform (2, 3), wobei die obere Ladeplattform (2) im wesentlichen an ihrem vorderen und hinteren Ende (4, 5) mittels Hubeinrichtungen (6, 7) relativ zur unteren Ladeplattform (3) anhebbar und absenkbar ist, von welchen Hubeinrichtungen (6, 7) wenigstens eine ein Paar von beidseitig am Fahrzeugtransporter (1) angeordneten, an ihren unteren Enden mit einer verdrehbaren Querachse verbundenen Hubarmen (11) aufweist, welche mit ihren oberen Ende (12) verschwenkbar an der oberen Ladeplattform gelagert sind,
**dadurch gekennzeichnet,**
**daß** jeder Hubarm (11) wenigstens ein unteres Aufnahmerohr (13) und ein in diesem höhenverstellbares Teleskoprohr (14) aufweist, wobei das Aufnahmerohr (13) in seine im wesentlichen vertikale Stellung vor Ausschieben des Teleskoprohres (14) verschwenkt ist, und daß an der oberen Ladeplattform (2) eine Gleitschiene (18) angeordnet ist, entlang welcher ein oberes Ende (16) des Teleskoprohres (14) verschiebbar ist.

2. Fahrzeugtransporter nach Anspruch 1, **dadurch gekennzeichnet, daß** das Aufnahmerohr (13) im wesentlichen an einem unteren Ende (15) mit der Querachse (10) verbunden ist.

3. Fahrzeugtransporter nach Anspruch 1 oder 2, **dadurch gekennzeichnet, daß** das Teleskoprohr (14) im wesentlichen an seinem oberen Ende (16) verschwenkbar an der oberen Ladeplattform (2) gelagert ist.

4. Fahrzeugtransporter nach wenigstens einem der vorangehenden Ansprüche, **dadurch gekennzeichnet, daß** innerhalb von Aufnahmerohr (13) und Teleskoprohr (14) eine pneumatisch oder hydraulisch betätigbare Kolben-Zylindereinheit (17) zum Ausschieben des Teleskoprohres aus dem Aufnahmerohr (13) angeordnet ist.

5. Fahrzeugtransporter nach wenigstens einem der vorangehenden Ansprüche, **dadurch gekennzeichnet, daß** die Querachse (10) durch ein unterhalb des Fahrzeugchassis (21) gelagertes Hubrohr (20) gebildet ist.

6. Fahrzeugtransporter nach wenigstens einem der vorangehenden Ansprüche, **dadurch gekennzeichnet, daß** zum Verdrehen des Hubrohres (20) in etwa mittig ein Kurbelarm (22) absteht, an dem ein mit seinem anderen Ende am Fahrzeugchassis gelagerter Arbeitszylinder angelenkt ist.

7. Fahrzeugtransporter nach wenigstens einem der vorangehenden Ansprüche, **dadurch gekennzeichnet, dass** Längsträger (23) der oberen Ladeplattform (2) mit Gleitschienen (18) ausgebildet sind.

8. Fahrzeugtransporter nach wenigstens einem der vorangehenden Ansprüche, **dadurch gekennzeichnet, daß** die Gleitschiene (18) als separates Bauteil an der oberen Ladeplattform (2) befestigt ist.

9. Fahrzeugtransporter nach wenigstens einem der vorangehenden Ansprüche, **dadurch gekennzeichnet, daß** am oberen Ende (16) des Teleskoprohres (14) eine Rolle (24) drehbar gelagert ist, die in einer im wesentlichen U-förmigen, in Richtung Teleskoprohr geöffneten Gleitschiene (18) abrollt.

10. Fahrzeugtransporter nach wenigstens einem der vorangehenden Ansprüche, **dadurch gekennzeichnet, daß** das Teleskoprohr (14) in einer in Fahrzeuglängsrichtung (25) nach hinten verschwenken Einschubstellung (27) des Hubarms (11) im wesentlichen vollständig im Aufnahmerohr (13) eingeschoben ist.

11. Fahrzeugtransporter nach wenigstens einem der vorangehenden Ansprüche, **dadurch gekennzeichnet, daß** Teleskoprohr (14) und Aufnahmerohr (13) aus eckigen, insbesondere sechseckigen, Kastenprofilen gebildet sind.

12. Fahrzeugtransporter nach wenigstens einem der vorangehenden Ansprüche, **dadurch gekennzeichnet, daß** die Gleitrolle (24) in Fahrzeuglängsrichtung nach vorn versetzt am Teleskoprohr 814) drehbar gelagert ist.

13. Fahrzeugtransporter nach wenigstens einem der vorangehenden Ansprüche, **dadurch gekennzeichnet, daß** die Kolben-Zylinder-Einheit (17) in Fahrzeuglängsrichtung (25) nach hinten versetzt außer mittig im Hubarm (11) angeordnet ist.

14. Fahrzeugtransporter nach wenigstens einem der vorangehenden Ansprüche, **dadurch gekennzeichnet, daß** das Teleskoprohr (14) im Aufnahmerohr (13) und/oder die Kolben-Zylinder-Einheit (17) zumindest in Ausziehstellung (26) des Teleskoprohres (14) durch eine mechanische und/oder pneumatische und/oder hydraulische Arretiereinrichtung (30) arretierbar sind.

15. Fahrzeugtransporter nach wenigstens einen der vorangehenden Ansprüche, **dadurch gekennzeichnet, daß** eine hydraulische Arretiereinrichtung (30) der Kolben-Zylinder-Einheit (17) zur im wesentlichen stufenlosen Arretierung zugeordnet ist.

16. Fahrzeugtransporter nach wenigstens einem der vorangehenden Ansprüche, **dadurch gekennzeichnet, daß** die weiteren Hubeinrichtungen (6,7) als Tragsäule (28), als Hubschwinge (29) oder als teleskopierbarer Hubarm (11) ausgebildet sind.

17. Fahrzeugtransporter nach wenigstens einem der vorangehenden Ansprüche, **dadurch gekennzeichnet, daß** zwischen Teleskoprohr (15) und Aufnahmerohr (13) reibungsvermindernde Gleitplatten zumindest im Bereich des oberen Endes (31) des Aufnahmerohres (13) auf dessen Innenseite stellenweise angeordnet sind.

18. Fahrzeugtransporter nach wenigstens einem der vorangehenden Ansprüche, **dadurch gekennzeichnet, daß** die Arretiereinrichtung (30) in Richtung ihrer Arretierstellung vorgespannt ist.

## Claims

1. Vehicle transporter (1) with upper and lower load platforms (2, 3), wherein the upper load platform (2) is raisable and lowerable essentially at its front and rear ends (4, 5) relative to the lower load platform (3) by means of lifting devices (6, 7) at least one of which has a pair of lift arms (11) arranged on either side of the vehicle transporter (1) which are connected at their lower ends to a transverse torque axle and are rockably mounted by their upper ends (12) on the upper load platform, **characterized in that** each lift arm (11) has at least a lower receiver tube (13) and a telescope tube (14) vertically displaceable therein, the receiver tube (13) being rocked into its essentially vertical position before the telescope tube (14) is extended, and **in that** a slide rail (18) is arranged on the upper load platform (2) along which an upper end (16) of the telescope tube (14) is slidable.

2. Vehicle transporter according to Claim 1, **characterized in that** the receiver tube (13) is connected essentially at a lower end (15) to the transverse axle (10).

3. Vehicle transporter according to Claim 1 or Claim 2, **characterized in that** the telescope tube (14) is rockably mounted essentially at its upper end (16) on the upper load platform (2).

4. Vehicle transporter according to at least one of the preceding claims, **characterized in that** a pneumatically or hydraulically operated piston/cylinder unit (17) is arranged inside the receiver tube (13) and telescope tube (14) to extend the telescope tube out of the receiver tube (13).

5. Vehicle transporter according to at least one of the preceding claims, **characterized in that** the transverse axle (10) is formed by a lift tube (20) mounted underneath the vehicle chassis (21).

6. Vehicle transporter according to at least one of the preceding claims, **characterized in that** to turn the lift tube (20) a crank arm (22) sticks up approximately centrally and is coupled to a ram cylinder mounted by its other end on the vehicle chassis.

7. Vehicle transporter according to at least one of the preceding claims, **characterized in that** longitudinal girders (23) of the upper load platform (2) are constructed with slide rails (18).

8. Vehicle transporter according to at least one of the preceding claims, **characterized in that** the slide rail (18) is attached to the upper load platform (2), as a separate component.

9. Vehicle transporter according to at least one of the preceding claims, **characterized in that** a roller (24) is rotatably mounted at the upper end (16) of the telescope tube (14) and rolls in an essentially U-shaped slide rail (18) open towards the telescope tube.

10. Vehicle transporter according to at least one of the preceding claims, **characterized in that** when the lift arm (11) is rocked rearwards in the longitudinal direction (25) of the vehicle into the retracted position (27) the telescope tube (14) is essentially fully retracted into the receiver tube (13).

11. Vehicle transporter according to at least one of the preceding claims, **characterized in that** the telescope tube (14) and receiver tube (13) are formed from polygonal, in particular hexagonal, box sections.

12. Vehicle transporter according to at least one of the preceding claims, **characterized in that** the slide roller (24) is rotatably mounted on the telescope tube (14) in a position offset forwards in the longitudinal direction of the vehicle.

13. Vehicle transporter according to at least one of the preceding claims, **characterized in that** the piston/cylinder unit (17) is arranged off centre in the lift arm (11) with the offset towards the rear in the longitudinal direction (25) of the vehicle.

14. Vehicle transporter according to at least one of the preceding claims, **characterized in that** the telescope tube (14) is lockable in the receiver tube (13) and/or the piston/cylinder unit (17) is immobilizable, by a mechanical and/or pneumatic and/or hydraulic locking device (30), at least when the telescope tube (14) is in the extended position (26).

15. Vehicle transporter according to at least one of the preceding claims, **characterized in that** a hydraulic locking device (30) for essentially stepless locking is assigned to the piston/cylinder unit (17).

16. Vehicle transporter according to at least one of the preceding claims, **characterized in that** the further lifting devices (6, 7) are constructed as column lift (28), rocker lift (29) or telescoping lift arm (11).

17. Vehicle transporter according to at least one of the preceding claims, **characterized in that** slide plates to reduce friction between telescope tube [14] and receiver tube (13) are arranged at least in the region of the upper end (31) of the receiver tube (13) at points on the inside of the latter.

18. Vehicle transporter according to at least one of the preceding claims, **characterized in that** the locking device (30) is preloaded in the direction towards its locking position.

## Revendications

1. Transporteur pour véhicules (1) avec une plate-forme de chargement supérieure et inférieure (2, 3), dans lequel la plate-forme de chargement supérieure (2) peut être levée et abaissée par rapport à la plate-forme de chargement inférieure (3) au moyen de dispositifs de levage (6, 7) essentiellement à ses extrémités avant et arrière (4, 5), au moins un des dispositifs de levage (6, 7) comportant une paire de bras de levage (11) disposés de part et d'autre du transporteur pour véhicules (1), reliés à leurs extrémité inférieures avec un axe transversal capable de rotation, qui par leurs extrémités supérieures (12) sont montés pivotants sur la plate-forme de chargement supérieure, **caractérisé en ce que** chaque bras de levage (11) comporte au moins un tube de logement inférieur (13) et un tube télescopique (14) réglable en hauteur dans celui-ci, le tube de logement (13) étant amené par pivotement essentiellement en position verticale avant le déploiement du tube télescopique (14), et **en ce que** sur la plate-forme de chargement supérieure (2) est disposé un rail de guidage (18) le long duquel une extrémité supérieure (16) du tube télescopique (14) est capable de translation.

2. Transporteur pour véhicules selon la revendication 1, **caractérisé en ce que** le tube de logement (13) est relié essentiellement à son extrémité inférieure (15) avec l'axe transversal (10).

3. Transporteur pour véhicules selon la revendication 1 ou 2, **caractérisé en ce que** le tube télescopique (14) est supporté, essentiellement à son extrémité supérieure (16), pivotant sur la plate-forme de chargement (2).

4. Transporteur pour véhicules selon au moins l'une des revendications précédentes, **caractérisé en ce qu'**à l'intérieur du tube de logement (13) et du tube télescopique (14) est disposée une unité piston-cylindre (17) pouvant être commandée pneumatiquement ou hydrauliquement pour déployer le tube télescopique hors du tube de logement (13).

5. Transporteur pour véhicules selon au moins l'une des revendications précédentes, **caractérisé en ce que** l'axe transversal (10) est formé par un tube de levage (20) supporté en-dessous du châssis du véhicule (21).

6. Transporteur pour véhicules selon au moins l'une des revendications précédentes, **caractérisé en ce que** pour faire tourner le tube de levage (20), un bras de manivelle (22) part environ du centre, sur lequel est articulé un vérin de travail supporté sur le châssis du véhicule par son autre extrémité.

7. Transporteur pour véhicules selon au moins l'une des revendications précédentes, **caractérisé en ce que** des longerons (23) de la plate-forme de chargement supérieure sont conformés avec des rails de guidage (18).

8. Transporteur pour véhicules selon au moins l'une des revendications précédentes, **caractérisé en ce que** le rail de guidage (18) est fixé en tant que pièce distincte sur la plate-forme de chargement supérieure (2).

9. Transporteur pour véhicules selon au moins l'une des revendications précédentes, **caractérisé en ce qu'**à l'extrémité supérieure (16) du tube télescopique (14), est supporté en rotation un rouleau (24) qui roule dans un rail de glissement (18) essentiellement en forme de U, ouvert dans la direction du tube télescopique.

10. Transporteur pour véhicules selon au moins l'une des revendications précédentes, **caractérisé en ce que** le tube télescopique (14), dans une position rétractée (27) du bras de levage (11) pivotée vers l'arrière dans le sens longitudinal du véhicule, est rétracté essentiellement entièrement dans le tube de logement (13).

11. Transporteur pour véhicules selon au moins l'une des revendications précédentes, **caractérisé en ce que** le tube télescopique (14) et le tube de logement (13) sont formés par des profilés polygonaux, en particulier hexagonaux.

12. Transporteur pour véhicules selon au moins l'une des revendications précédentes, **caractérisé en ce que** le rouleau de glissement (24) est supporté en rotation sur le tube télescopique (14) décalé vers l'avant dans le sens longitudinal du véhicule.

13. Transporteur pour véhicules selon au moins l'une des revendications précédentes, **caractérisé en ce que** l'unité piston-cylindre (17) est disposée excentrée sur le bras de levage (11) décalée vers l'arrière dans le sens longitudinal du véhicule (25).

14. Transporteur pour véhicules selon au moins l'une des revendications précédentes, **caractérisé en ce que** le tube télescopique (14) dans le tube de logement (13) et/ou l'unité piston cylindre au moins dans la position déployée (26) du tube télescopique (14), peut être bloqué(e) par un dispositif de blocage (30) mécanique et/ou pneumatique et/ou hydraulique.

15. Transporteur pour véhicules selon au moins l'une des revendications précédentes, **caractérisé en ce qu'**un dispositif de blocage hydraulique (30) est associé à l'unité piston-cylindre (17) pour le blocage essentiellement continu.

16. Transporteur pour véhicules selon au moins l'une des revendications précédentes, **caractérisé en ce que** les autres dispositifs de levage (6, 7), sont conformés en colonne portante (28), bielle de levage (29) ou en bras de levage télescopique (11).

17. Transporteur pour véhicules selon au moins l'une des revendications précédentes, **caractérisé en ce qu'**entre le tube télescopique (15) et le tube de logement (13) sont disposées par endroits des plaques de glissement réduisant les frottements, au moins dans la zone de l'extrémité supérieure (31) du tube de logement (13) sur son côté intérieur.

18. Transporteur pour véhicules selon au moins l'une des revendications précédentes, **caractérisé en ce que** le dispositif de blocage (30) est précontraint dans la direction de sa position de blocage.
